# EUROPEAN PATENT APPLICATION

(11) **EP 4 821 731 A1**
(43) Date of publication of application: **14.10.2026**
(21) Application number: 25216973.5
(22) Date of filing: 19.11.2025
(51) Int. Cl.: B60K 35/10, B60K 35/22, B60K 35/81

(54) **DISPLAY METHOD AND DEVICE, VEHICLE, STORAGE MEDIUM, AND PROGRAM PRODUCT**

(30) Priority: 07.04.2025 CN 202510429632
(71) Applicant: Xiaomi EV Technology Co., Ltd., Beijing 100176 (CN); Beijing Xiaomi Mobile Software Co., Ltd., Beijing 100085 (CN)
(72) Inventor: MA, Zhiyuan, Beijing, 100176 (CN); BAI, Lu, Beijing, 100176 (CN); BAO, Xiehao, Beijing, 100176 (CN)
(74) Representative: Stöckeler, Ferdinand

(57) **Abstract**

The present invention relates to the field of vehicle information display technology, and in particular to a display method and device, a vehicle, a storage medium, and a program product. The display method includes: determining (S11), in a case where hardware configuration information of a vehicle changes, a display avoidance area (301, 302) in a display device of the vehicle according to the changed hardware configuration information; and adjusting (S12) a position of a display element on the display device according to the display avoidance area (301, 302).

## Description

### TECHNICAL FIELD

The present invention relates to the field of vehicle information display technology, and in particular to a display method and device, a vehicle, a storage medium, and a program product.

### BACKGROUND OF THE INVENTION

With the development of vehicle intelligence, diversification and intelligence of in-vehicle display screens have gradually become a mainstream. However, display of a conventional display device is relatively fixed, and driving safety and user experience may be affected due to irrationality of its display.

### SUMMARY OF THE INVENTION

To solve problems in the related art, the present invention provides a display method and device, a vehicle, a storage medium, and a program product.

The invention is set out in the appended set of claims.

According to a first aspect of the embodiments of the present invention, a display method is provided. The display method includes:
determining, in a case where hardware configuration information of a vehicle changes, a display avoidance area in a display device of the vehicle according to the changed hardware configuration information; and
adjusting a position of a display element on the display device according to the display avoidance area.

According to a second aspect of the embodiments of the present invention, a display device is provided. The display device includes:
a determining module, configured to determine, in a case where hardware configuration information of a vehicle changes, a display avoidance area in the display device of the vehicle according to the changed hardware configuration information; and
an adjusting module, configured to adjust a position of a display element on the display device according to the display avoidance area.

According to a third aspect of the embodiments of the present invention, a display device is provided. The display device includes:
a processor; and
a memory configured to store processor-executable instructions;
where the processor is configured to execute the processor-executable instructions in the memory to implement steps of the display method provided by the first aspect of the present invention.

According to a fourth aspect of the embodiments of the present invention, a vehicle is provided. The vehicle includes the display device provided by the second aspect or the third aspect of the present invention.

According to a fifth aspect of the embodiments of the present invention, a computer-readable storage medium having stored thereon computer program instructions is provided. The program instructions, when executed by a processor, implement steps of the display method provided by the first aspect of the present invention.

According to a sixth aspect of the embodiments of the present invention, a computer program product including a computer program is provided. The computer program, when executed by a processor, implements steps of the display method provided by the first aspect of the present invention.

Technical solutions provided by the embodiments of the present invention may include the following beneficial effects.

In a case where the hardware configuration information of the vehicle changes, the display avoidance area in the display device of the vehicle is determined according to the changed hardware configuration information. The position of the display element on the display device is adjusted according to the display avoidance area. Different positions of the display element have different degrees of visual intuitiveness for a user. By dynamically adjusting the position of the display element, display blockage caused by a change in hardware configuration may be avoided, such that the user may clearly and accurately obtain information provided by the display element, thus improving driving safety and user experience.

It is to be understood that the above general descriptions and the following detailed descriptions are merely examples and illustrative, and cannot limit the present invention.

### BRIEF DESCRIPTION OF DRAWINGS

Accompanying drawings here are incorporated into the specification, constitute a part of the specification, show embodiments consistent with the present invention, and are used to explain the principle of the present invention together with the specification.
FIG. 1 is a flowchart of a display method according to an example.
FIG. 2 is a schematic diagram of display areas of a display device according to an example.
FIG. 3 is a schematic diagram of display areas when sight of a user is blocked according to an example.
FIG. 4 is a schematic diagram of display areas of a display device according to an example.
FIG. 5 is a schematic diagram of display areas of a display device according to an example.
FIG. 6 is a flowchart of a display method according to an example.
FIG. 7 and FIG. 8 are schematic diagrams of a display area being blocked according to different examples.
FIG. 9 to FIG. 18 are schematic diagrams of adjusting display elements according to different examples.
FIG. 19 is a block diagram of a structure of a display device according to an example.
FIG. 20 is a block diagram of a structure of a display device according to another example.
FIG. 21 is a block diagram of a structure of a vehicle according to an example.

### DETAILED DESCRIPTION OF THE INVENTION

Examples are illustrated in detail here, and their instances are shown in the accompanying drawings. When the following description refers to the accompanying drawings, unless otherwise indicated, the same numbers in different accompanying drawings indicate the same or similar elements. Implementations described in the following examples do not represent all implementations consistent with the present invention. Rather, they are merely instances of devices and methods consistent with some aspects of the present invention as detailed in the appended claims.

It is to be noted that all actions of obtaining signals, information or data in the present invention are performed in compliance with corresponding data protection regulations and policies of the country in which they are located, and with authorization granted by owners of corresponding devices.

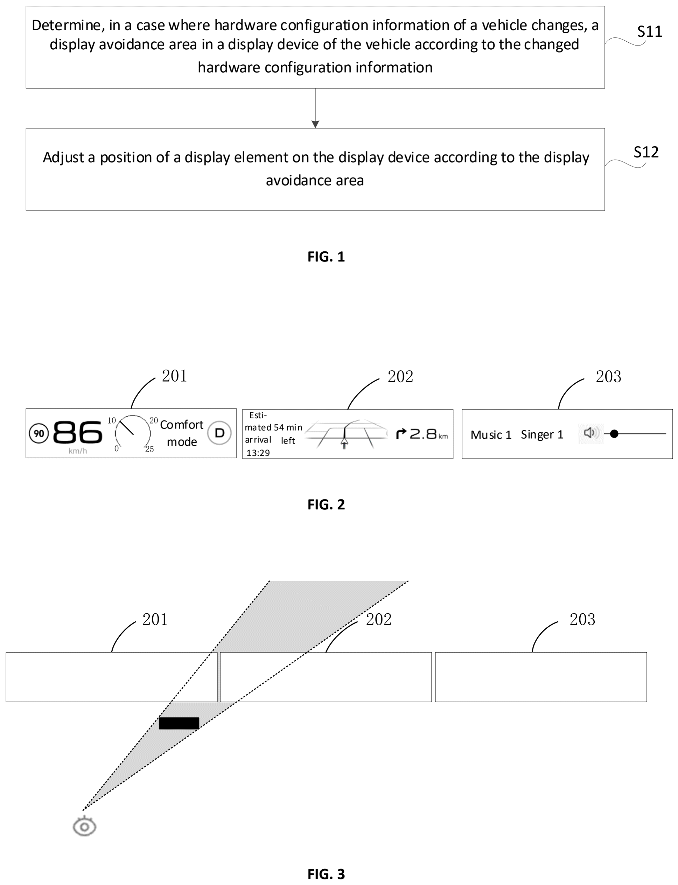

FIG. 1 is a flowchart of a display method according to an example. The method may be applied to a controller, such as a vehicle controller in a vehicle, or a controller of a separate display device. As shown in FIG. 1, the method may include step S11 and step S12.

In step S11, in a case where hardware configuration information of a vehicle changes, a display avoidance area in a display device of the vehicle is determined according to the changed hardware configuration information.

In an embodiment, the hardware configuration information of the vehicle may include at least one of: configuration information of a seat, configuration information of a steering wheel, or configuration information of an in-vehicle accessory.

For example, the configuration information of the seat may include at least one of the height of the seat, the front-back-direction position of the seat, or the backrest angle of the seat. A change in the configuration information of the seat may result in a change in the posture of a user, causing a change in the field of view of the user, which in turn affects the current visual area of the user (i.e., an area where the sight of the user is not blocked) in a display area of the display device.

For example, the configuration information of the steering wheel may include at least one of the position of the steering wheel or the angle of the steering wheel. It may be determined that the adjusted steering wheel may affect the visual area of the user in the display area of the display device in a case where the configuration information of the steering wheel changes, for example, the adjusted steering wheel may block the current visual area of the user in the display area.

For example, the configuration information of the in-vehicle accessory may indicate that a new in-vehicle accessory is installed into the cockpit of the vehicle, or that an in-vehicle accessory installed into the cockpit is removed. The in-vehicle accessory may include a device fixed in the cockpit of the vehicle through a magnetic or physical interface. The use of the magnetic or physical interface may not only determine whether an in-vehicle accessory is installed into the cockpit of the vehicle, but also determine the device type of the connected in-vehicle accessory. For example, the type of the in-vehicle accessory may include a sound-reactive light and a mobile phone holder. Areas of blockage caused by connecting the sound-reactive light and connecting the mobile phone holder through the same interface are different, and thus the area of blockage caused by the in-vehicle accessory may be determined by determining the type of the in-vehicle accessory.

The in-vehicle accessory may include an electronic device or a fixing device for fixing the electronic device. The electronic device may include at least one of: a physical screen, or a peripheral connected to a peripheral interface of the physical screen. The fixing device for fixing the electronic device may include at least one of: a holder, or a charging device for charging the electronic device.

In an embodiment, the charging device may be a wireless charging device or a wired charging device. It may be determined whether the charging device charges the electronic device according to the state of the charging device. In a case where the charging device charges the electronic device, it may be determined that placement of the electronic device may block the current visual area of the user in the display area.

In an embodiment, the physical screen may include a center control screen, an instrument screen, or other real screens for displaying information in the vehicle. The posture of the physical screen may be adjusted by controlling a driving device of the physical screen. For example, the position and angle of the physical screen may be adjusted by stretching or rotating. In a case where the posture of the physical screen changes, it may be determined that the adjusted physical screen may block the current visual area of the user in the display area. In another embodiment, a peripheral interface is arranged on the physical screen, and the peripheral interface may be configured to connect peripherals such as a keyboard, a click wheel, an ambient light, and a scenting device. Placement of the peripherals may block the current visual area of the user in the display area.

Both the electronic device and the fixing device for fixing the electronic device may block the current visual area of the user in the display area. The configuration information of the in-vehicle accessory in the cockpit, such as the installed in-vehicle accessory, and the type, size, and position of the installed in-vehicle accessory, may be determined based on the state of the magnetic or physical interface for connecting the fixing device or the electronic device.

The changed hardware configuration information may be information of the hardware of the vehicle after an adjustment is completed, or information of the process of the adjustment. For example, in a case where the user adjusts the height of the steering wheel, the position of the adjusted steering wheel may be determined based on the adjustment direction and adjustment speed of the steering wheel during the adjustment process. For another example, in a case where the user adjusts the height of the steering wheel, the position of the adjusted steering wheel may be determined based on the position of the display avoidance area during the adjustment process.

The display device of the vehicle may include at least one display area. In an embodiment, the display device may include a real physical screen. Taking an example that the display device is a long strip screen of a center console, the display area of the display device may extend from one side of the center console to the other side. In another embodiment, the display device may include a virtual screen. Taking an example that the display device is a projection display device, the display device may be configured to make a projection towards the front windshield of the vehicle to form a display area extending from one side of the front windshield to the other side. For example, the display device may include one or more projection devices (e.g., an optical machine and a projector). Each projection device makes a projection towards the front windshield of the vehicle respectively to form one or more display areas extending from one side of the front windshield to the other side. For example, the user may also set the number of display areas. For example, the display device has three projectors, and the user may select to provide merely two display areas. The system may be set to put the projectors corresponding to the two display areas selected by the user in a working state, and put another projector in a non-working state, such as a standby state or a shutdown state. The number of the display areas is not limited in the present invention.

In a case where the in-vehicle display device includes at least two display areas, the at least two display areas may be arranged transversely, for example, three display areas are arranged transversely. However, in other implementations, the at least two display areas may also be arranged longitudinally, for example, arranged longitudinally along the A-pillar on the front windshield, which is not limited in the present invention.

For example, the display device includes three projection devices. The three projection devices make projections towards a left side position, a middle position, and a right side position of a lower part of the front windshield respectively, and thus three display areas are formed. In FIG. 2, the display area on the left is referred to as a display area 201 in the following, the display area in the middle is referred to as a display area 202 in the following, and the display area on the right is referred to as a display area 203 in the following.

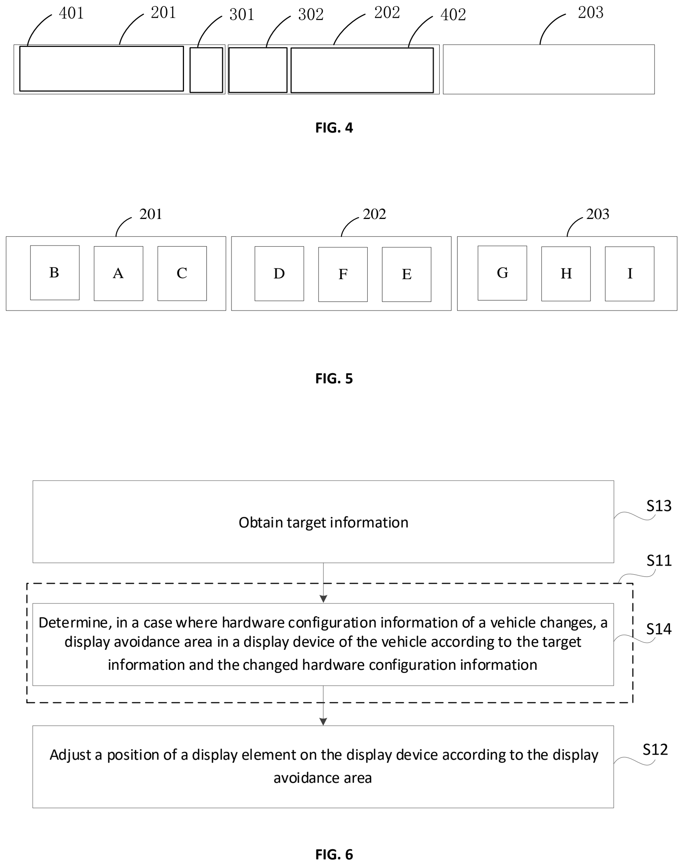

In order to prevent the change in the hardware configuration information of the vehicle from affecting obtaining of a display element in the display area by the user, the display avoidance area may be determined to perform step S12. The display avoidance area is located in at least one display area. The change in the hardware configuration information of the vehicle may cause an obstacle to block part of display elements in the display area. As shown in FIG. 3, due to blockage by the obstacle, an area where the sight of the user is blocked is generated as shown in a gray triangular area in FIG. 3. The display avoidance area in the display device may be determined according to the area where the sight of the user is blocked. For example, the area where the sight of the user is blocked in the display area of the display device may be determined as the display avoidance area. For another example, a display avoidance area 301 and a display avoidance area 302 as shown in FIG. 4 may be determined.

In step S12, a position of a display element on the display device is adjusted according to the display avoidance area.

In the present invention, the display element refers to a User Interface (UI) element presented in the display area of the in-vehicle display device. The UI element is used to show vehicle information to the user. For example, the UI element may include a UI element for showing the current vehicle speed to the user, a UI element for showing a navigation map interface to the user, a UI element for showing remaining power of a power battery to the user, a UI element for showing the name of the currently played multimedia content to the user, etc. In addition, the showing form of the UI element may include at least one of: a picture, a graphic, a text, or an animation. The vehicle information may be divided into different categories of information, e.g. instrument type information, navigation type information, and entertainment type information. The in-vehicle display device includes three display areas, and the three display areas may be configured to display the instrument type information, the navigation type information, and the entertainment type information respectively.

FIG. 5 shows a schematic diagram of display elements in display areas of a display device. As shown in FIG. 5, the display device includes a display area 201, a display area 202, and a display area 203. The display area 201 is configured to display the instrument type information, such as a vehicle speed, a mileage, remaining power of a power battery, and driving energy consumption. The display area 202 is configured to display the vehicle navigation type information, such as a navigation map interface, vehicle turning prompt information, a navigation remaining distance, and a navigation remaining duration. The display area 203 is configured to display the entertainment type information, such as a name of a multimedia content, a playing volume of the multimedia content, and a playing mode of the multimedia content.

In one example, as shown in FIG. 5, the display area 201 displays three UI elements, i.e., a UI element A for showing the vehicle speed, a UI element B for showing the mileage, and a UI element C for showing the driving energy consumption respectively. The display area 202 displays three UI elements, i.e., a UI element D for showing the vehicle turning prompt information, a UI element E for showing the navigation remaining distance, and a UI element F for showing the navigation map interface respectively. The display area 203 displays three UI elements, i.e., a UI element G for showing the name of the multimedia content, a UI element H for showing the playing volume of the multimedia content, and a UI element I for showing the playing mode of the multimedia content respectively.

It is to be noted that the display elements displayed in the various display areas illustrated above are merely examples. The display elements displayed in the various display areas may be preset by the user on demand. The display elements may be dynamically adjusted according to the changed hardware configuration information by the method provided by the present invention during a vehicle driving process.

In one implementation, a display element currently displayed in the display avoidance area may be adjusted to a non-display avoidance area in the display area of the display device, such that obtaining of the display element by the user may be ensured, thus ensuring user experience and avoiding the impact on driving safety. In a case where a part of a certain display element is located in the non-display avoidance area and another part is located in the display avoidance area, it may be determined that it is difficult for the user to clearly and accurately obtain information provided by the display element. The display element may be regarded as a display element that needs to be adjusted (i.e., the display element currently displayed in the display avoidance area), and the display element is adjusted to a state of being completely located in the non-display avoidance area.

In the above technical solution, in a case where the hardware configuration information of the vehicle changes, the display avoidance area in the display device of the vehicle is determined according to the changed hardware configuration information. The position of the display element on the display device is adjusted according to the display avoidance area. Different positions of the display element have different degrees of visual intuitiveness for a user. By dynamically adjusting the position of the display element, display blockage caused by a change in hardware configuration may be avoided, such that the user may clearly and accurately obtain information provided by the display element, thus improving driving safety and user experience.

In an embodiment, the display avoidance area may be a display area where no display element is allowed to be displayed.

In another embodiment, the display avoidance area may be a display area where a preset display element is not allowed to be displayed. The preset display element is a display element that meets a preset condition.

For example, the preset condition may include a case where a priority of the display element is ranked in a top preset number of positions in a descending order. The preset number may be preset based on actual demands. For example, the preset number may be set to 5. In a case where the display elements include the UI element A for showing the vehicle speed, the UI element B for showing the mileage, the UI element C for showing the driving energy consumption, the UI element D for showing the vehicle turning prompt information, and the UI element E for showing the navigation remaining distance, a descending order of priorities of these UI elements: the priority of the UI element A > the priority of the UI element B > the priority of the UI element C > the priority of the UI element D > the priority of the UI element E. Then, the UI element A, the UI element B, the UI element C, and the UI element D may be determined as preset display elements. Display elements ranked in the top preset number of positions provide information that is more important or of a higher degree of attention, and these display elements may be determined as the preset display elements.

For another example, the preset condition may include a case where the priority of the display element is greater than a preset threshold. The preset threshold may be preset based on actual demands. In a case where the priority of the display element is greater than the preset threshold, it may be determined that the display element provides information that is more important or of a higher degree of attention, and the display element having the priority greater than the preset threshold may be determined as the preset display element. In a case where the priority of the display element is less than or equal to the preset threshold, it may be determined that information provided by the display element is of a lower degree of importance or is of a lower degree of attention, and the display element may not be determined as the preset display element.

The priority of the display element is determined according to at least one of: a degree of importance of the display element; a degree of attention the user pays to the display element; or an information category corresponding to the display element.

In an embodiment, the priority of the display element may be determined according to the degree of importance of the display element. For example, information for indicating a degree of importance of each display element may be stored in the vehicle. The information indicating the degree of importance may be set by a user or preset by the manufacturer when the vehicle leaves the factory. The priority of the display element may be determined according to the information for indicating the degree of importance. For example, degrees of importance are vehicle speed > mileage > driving energy consumption among the instrument type information during the driving process. Thus, the priority of the UI element A for showing the vehicle speed is high, the priority of the UI element B for showing the mileage is medium, and the priority of the UI element C for showing the driving energy consumption is low.

In an embodiment, the priority of the display element may be determined according to the degree of attention the user pays to the display element. The higher the degree of attention the user pays to the display element, the higher the priority of the display element may be. The degree of attention the user pays to the display element may be determined according to interaction information between the user and the display element. In one implementation, the interaction information may include information of sight attention the user pays to the display element. For example, the sight of the user may be monitored by a camera to determine a position where the sight of the user is located, and the degree of attention the user pays to the display element is updated accordingly. In other implementations, the interaction information may include information of interaction operations performed by the user on the display element through a switch, a button, a voice, or a gesture. In a case where an interaction behavior between the user and the display element is monitored, the degree of attention the user pays to the display element may be updated accordingly. The degree of attention may be characterized by at least one of: the number of times of attention, a frequency of attention, a time of attention, etc. The higher the degree of attention the user pays to the display element, the higher the priority of the display element.

In the present invention, the user may be located in a driving seat of the vehicle or a non-driving seat of the vehicle. The user located in the driving seat of the vehicle is related to driving safety of the vehicle, and thus a priority of the user in the driving seat is higher than a priority of the user in the non-driving seat in this embodiment. The degree of attention the user in the driving seat pays to the display element is prioritized during the vehicle driving process.

In an embodiment, the priority of the display element may be determined according to the information category corresponding to the display element. Specific implementations of the information category corresponding to the display element have been described in detail above, and repeated contents are omitted here. In order to ensure driving safety of the vehicle, for example, priorities of the display elements of the instrument type information and the navigation type information are greater than a priority of the display element of the entertainment type information.

The priority of the display element may be determined according to any one or more of the above three types of information. In a case where the priority of the display element is determined according to more than one of the above three types of information, as an example, one priority value of the display element may first be determined according to each type of information, and then weighted averaging is performed on these priority values to obtain final priority information of the display element. Weights corresponding to various information may be preset. As an example, a weight corresponding to the degree of importance of the display element and a weight corresponding to the degree of attention the user pays to the display element are greater than a weight corresponding to the information category of the display element.

In this way, preset display elements which are more important and the user pays more attention to may be determined using the priorities, so as to adjust the preset display elements and avoid adjusting all display elements, which reduces occupation of resources.

FIG. 6 is a flowchart of a display method according to an example. As shown in FIG. 6, the method may further include step S13. Step S11 may include step S14.

In step S13, target information is obtained.

The target information includes at least one of: a position of eyes of the user, a type of an in-vehicle accessory installed into the cockpit of the vehicle, or a current height of the display area of the display device.

For example, the position of the eyes of the user may be used to determine a field of view of the user. The position of the eyes of the user may be an actual position of the eyes of the user, or may be a relative position between the position of the eyes of the user and the display area of the display device. In an embodiment, a camera arranged in the vehicle may be used to collect a first image including the face of the user and a position reference device in the cockpit. A controller may perform image recognition on the first image collected by the camera to determine the position of the eyes of the user. In another embodiment, the position of the eyes of the user may be determined according to the height of the seat and the front-back-direction position of the seat. In yet another embodiment, a first reference position of the eyes may be obtained according to the collected first image, a second reference position of the eyes may be obtained according to the height of the seat and the front-back-direction position of the seat, and a final position of the eyes of the user may be obtained by performing weighted averaging on the first reference position and the second reference position. As an example, a weight of the first reference position is greater than a weight of the second reference position.

For example, the type of the in-vehicle accessory installed into the cockpit of the vehicle may be used to determine the size of the in-vehicle accessory. In an embodiment, if the in-vehicle accessory (e.g., a physical screen) installed into the cockpit of the vehicle may communicate directly or indirectly with a controller, in a case where the in-vehicle accessory is installed into the cockpit, the controller may obtain the type of the in-vehicle accessory via communication with the in-vehicle accessory. In another embodiment, a camera arranged in the vehicle may be used to collect a second image including the in-vehicle accessory installed into the cockpit of the vehicle. The controller may perform image recognition on the second image collected by the camera to obtain the type of the in-vehicle accessory installed into the cockpit of the vehicle.

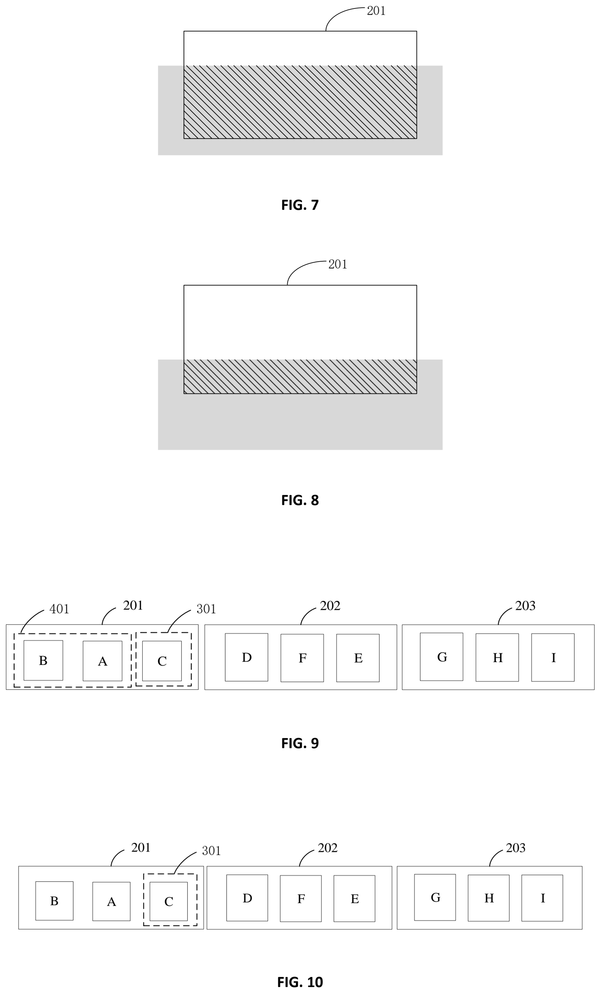

For example, the current height of the display area of the display device may be used to determine a specific position of the display area. In an embodiment, the current height of the display area may be read in real time through the display device. In a case where areas where the sight of the user in the vehicle is blocked are the same, display areas at different heights are affected differently. Darker parts in FIG. 7 and FIG. 8 are used to represent the areas where the sight of the user is blocked. The area where the sight of the user is blocked in the display area 201 located at a lower position in FIG. 7 is larger, and the area where the sight of the user is blocked in the display area 201 located at an upper position in FIG. 8 is smaller. In order to enable the user to obtain information provided by display elements in the area where the sight of the user is blocked, display avoidance areas determined in the display area 201 are different in the cases in FIG. 7 and FIG. 8. Thus, precise determination of the display avoidance area may be implemented according to the current height of the display area.

In step S14, in a case where the hardware configuration information of the vehicle changes, the display avoidance area in the display device of the vehicle is determined according to the target information and the changed hardware configuration information.

In an embodiment, the field of view of the user may be determined according to the position of the eyes of the user. In another embodiment, in a case where the hardware configuration information includes the configuration information of the seat, the field of view of the user may be more accurately determined according to the position of the eyes of the user and the backrest angle of the seat in the changed hardware configuration information.

In an embodiment, the size of the in-vehicle accessory installed into the cockpit of the vehicle may be determined according to the type of the in-vehicle accessory. The same magnetic or physical interface may be connected to different types of electronic devices. For example, a magnetic interface on the left side of the center control screen may be connected to both a mobile phone holder and a sound-reactive light. Alternatively, a physical interface on the left side of the center console may be connected to both a mobile phone holder and a GoPro (an action camera). In such case, the type of the connected device may be determined according to a device type signal received by the interface, and a blocked area may be further determined. Since the connection position of the in-vehicle accessory (e.g. the position of the physical interface, or the magnetic attraction position) in the cockpit of the vehicle is relatively fixed, the position of the in-vehicle accessory installed into the cockpit of the vehicle may also be determined. Thus, an obstacle that may generate sight interference to the field of view of the user may be more easily determined according to the type of the in-vehicle accessory installed into the cockpit of the vehicle. In another embodiment, in a case where the hardware configuration information includes at least one of the configuration information of the steering wheel or the configuration information of the in-vehicle accessory, the obstacle that may generate sight interference to the field of view of the user may be more accurately determined according to at least one of the configuration information of the steering wheel or the configuration information of the in-vehicle accessory included in the changed hardware configuration information. In yet another embodiment, the obstacle that may generate sight interference to the field of view of the user may be more accurately and comprehensively determined using the type of the in-vehicle accessory installed into the cockpit of the vehicle, and at least one of the configuration information of the steering wheel or the configuration information of the in-vehicle accessory included in the changed hardware configuration information.

The area where the sight of the user is blocked may be determined using the method for determining the field of view of the user provided by any of the above embodiments, and the method for determining the obstacle that may generate sight interference to the field of view of the user provided by any of the above embodiments. Based on this, the area where the sight of the user is blocked in the display area of the display device may be determined in combination with the current height of the display area, thus implementing accurate determination of the display avoidance area.

The display avoidance area may be accurately determined according to the target information and the changed hardware configuration information by the technical solution as shown in FIG. 6. In this way, the position of the display element on the display device is adjusted according to the display avoidance area, and display blockage caused by a change in hardware configuration may be avoided, such that the user may clearly and accurately obtain information provided by the display element, thus improving driving safety and user experience.

In an embodiment, the display method provided by the present invention may further include the following steps.

An area setting instruction is received, where the area setting instruction is configured to indicate a position or a range of a display avoidance area set by a user.

The display avoidance area is determined according to the area setting instruction.

For example, the display area in the display device is a touchable area. The user may define the display avoidance area on the touchable area. For another example, the display device is connected to a click device, such as a mouse, and the user may define the display avoidance area on the display area using the click device. For example, the user may implement area division by clicking on a position at an edge of an obstacle, so as to generate the area setting instruction for indicating the position or range of the display avoidance area set by the user. The display avoidance area determined by the user himself may be obtained based on the area setting instruction. In this way, not only may a degree of participation of the user be increased, but also flexibility of the determined display avoidance area may be improved.

In an embodiment, in step S12, the position of the display element on the display device may be adjusted according to the display avoidance area in the following way.

A first display element to be adjusted is determined, where the first display element is all display elements currently displayed in the display avoidance area or a preset display element currently displayed in the display avoidance area, and the preset display element is a display element that meets a preset condition.

The first display element is adjusted to a target display area, where the target display area is located outside the display avoidance area.

For example, specific implementations of the preset display element and the preset condition have been described in detail above, and repeated contents are omitted here.

An implementation of the present invention is introduced below, in which the display device includes a first display area, the display avoidance area is located in the first display area, and the target display area is an area in the first display area that is located outside the display avoidance area. That is, the target display area is located in the first display area where the first display element is currently located.

As shown in FIG. 4, a display avoidance area 301 exists in a display area 201, and a display avoidance area 302 exists in a display area 202. In an embodiment, a non-display avoidance area 401 and a non-display avoidance area 402 may be determined as the target display areas. In another embodiment, the non-display avoidance area 401 may be determined as the target display area. A first display element in the display avoidance area 301 may be adjusted to the non-display avoidance area 401 in the same display area. A first display element in the display avoidance area 302 may be adjusted to the non-display avoidance area 401 across display areas. In yet another embodiment, in a case where the non-display avoidance area 402 is determined as the target display area, the first display element in the display avoidance area 302 may be adjusted to the non-display avoidance area 402 in the same display area, and the first display element in the display avoidance area 301 may be adjusted to the non-display avoidance area 402 across display areas.

For different display areas of the display device, there may be differences in UI styles or UI themes of the UI elements in each display area. Thus, in order not to affect overall visual experience of the user on the display areas after an adjustment, display elements in different display areas may not be displayed across areas. Considering flexibility of adjustment of display elements, display elements in different display areas may also be displayed across areas.

An implementation of the present invention is introduced below, in which the display device includes a first display area and a second display area, the display avoidance area is located in the first display area, and the target display area is the second display area. The second display area is a display area that is different from the first display area and does not include the display avoidance area. Taking FIG. 4 as an example, the second display area, i.e., the target display area, may be the display area 203.

The following description is on the basis of FIG. 9 and FIG. 10, and various implementations of adjusting the first display element to the target display area are provided. A first display area in FIG. 9 is a display area 201, and a first display element is a UI element C currently displayed in a display avoidance area 301. The UI element C may be adjusted to a non-display avoidance area 401 in the display area 201 in order to enable the user to intuitively obtain the UI element C. A first display area in FIG. 10 is a display area 201, and a first display element is a UI element C currently displayed in a display avoidance area 301. The UI element C may be adjusted to a target display area in another display area in order to enable the user to intuitively obtain the UI element C, for example, a display area 203 is taken as the target display area.

In an example, a display element included in the target display area before the first display element is adjusted is retained, and the first display element is adjusted to the target display area.

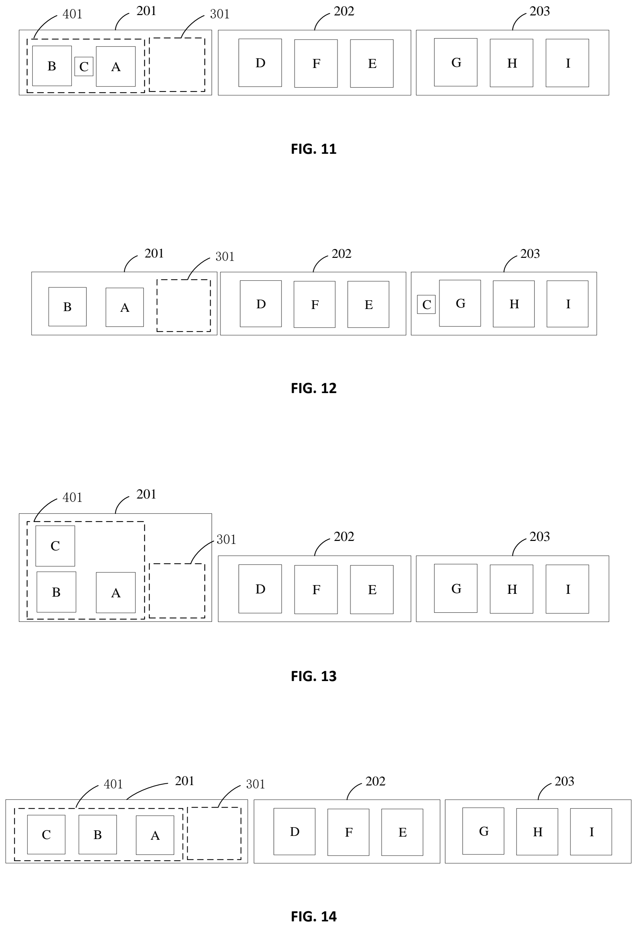

For example, in a case where the first display element is added to the target display area, the size of the current target display area is kept unchanged, and the first display element is adjusted to a blank area of the target display area. As shown in FIG. 11, FIG. 11 is a schematic diagram of a display interface in a case where the first display element (the UI element C) is adjusted to the non-display avoidance area 401 in the display area 201 based on FIG. 9 in an embodiment. As shown in FIG. 12, FIG. 12 is a schematic diagram of a display interface in a case where the first display element (the UI element C) is adjusted to the display area 203 based on FIG. 10 in an embodiment.

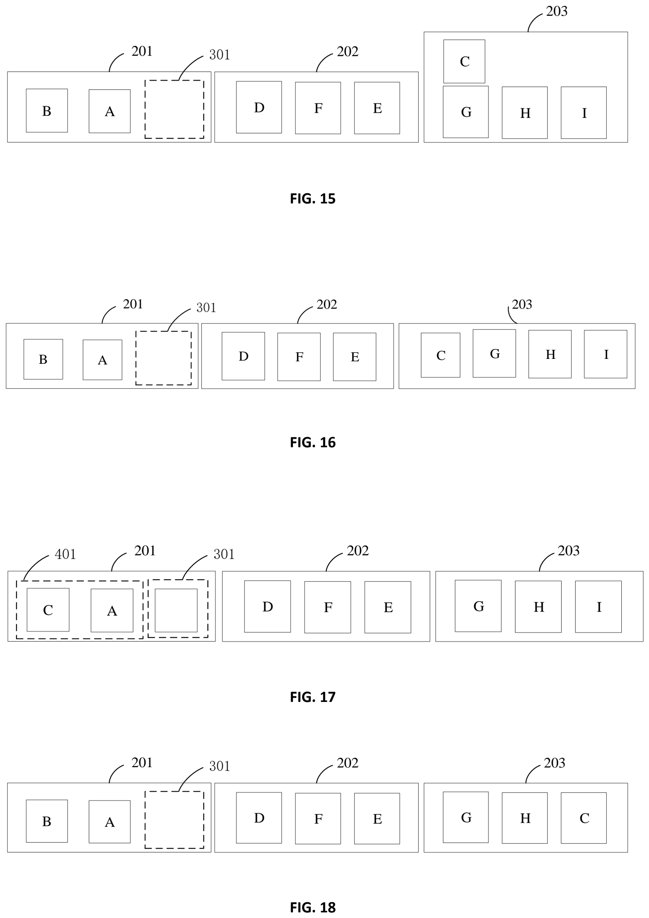

For example, in a case where the first display element is added to the target display area, at least one of the height or the width of the target display area may be adjusted to update the target display area, so as to provide a blank area for the first display element. The height of the display area may be adjusted to a preset height value, and the width of the display area may be adjusted to a preset width value. As shown in FIG. 13, FIG. 13 is a schematic diagram of a display interface in a case where the first display element (the UI element C) is adjusted to the non-display avoidance area 401 in the display area 201 based on FIG. 9 during a height adjustment in an embodiment. As shown in FIG. 14, FIG. 14 is a schematic diagram of a display interface in a case where the first display element (the UI element C) is adjusted to the non-display avoidance area 401 in the display area 201 based on FIG. 9 during a width adjustment in an embodiment. As shown in FIG. 15, FIG. 15 is a schematic diagram of a display interface in a case where the first display element (the UI element C) is adjusted to the display area 203 based on FIG. 10 during a height adjustment in an embodiment. As shown in FIG. 16, FIG. 16 is a schematic diagram of a display interface in a case where the first display element (the UI element C) is adjusted to the display area 203 based on FIG. 10 during a width adjustment in an embodiment.

In another example, a current display element in the target display area may be replaced with the first display element, so as to adjust the first display element to the target display area.

For example, before the first display element is adjusted, priorities of the display elements in the target display area are ranked in a descending order, and a display element ranked after the current display element in the target display area is determined as the first display element. Taking FIG. 9 as an example, the UI element C is the first display element. In a case where the priority of the UI element A > the priority of the UI element C > the priority of the UI element B, the UI element B may be replaced with the UI element C. As shown in FIG. 17, FIG. 17 is a schematic diagram of a display interface in a case where the first display element (the UI element C) is adjusted to the non-display avoidance area 401 in the display area 201 based on FIG. 9 in an embodiment.

For example, priorities of the display elements in the first display area are ranked in a descending order. A display element having a priority lower than that of the first display element in the target display area before the first display element is adjusted is determined as a replaceable second display element, and a third display element to be replaced may be determined from the second display element. For example, a second display element ranked after the first display element may be determined as the third display element to be replaced. For another example, any one of the second display elements may be determined as the third display element. Taking FIG. 10 as an example, in a case where the UI element C is the first display element and the priority of the UI element C > the priority of the UI element G > the priority of the UI element H > the priority of the UI element I, the UI element G, the UI element H, and the UI element I may be determined as second display elements. The UI element I may be replaced with the UI element C in a case where the UI element I is the third display element. As shown in FIG. 18, FIG. 18 is a schematic diagram of a display interface in a case where the first display element (the UI element C) is adjusted to the display area 203 based on FIG. 10 in an embodiment. In an embodiment, in a case where the third display element is not determined, adjustment of display elements may be implemented by the above embodiment, in which the display element included in the target display area before the first display element is adjusted is retained, and the first display element is adjusted to the target display area.

The first display element is adjusted to the target display area in the display device in a case where a partial area of an in-vehicle display screen is blocked, such that the user may obtain the information provided by the first display element from the display area more quickly and conveniently without the need of adjusting the body posture, which ensures efficiency of information obtaining.

An implementation of the present invention is introduced below, in which the changed hardware configuration information indicates that a new in-vehicle accessory is installed into the cockpit of the vehicle. The new in-vehicle accessory is a device having a display screen, and the target display area is the display screen of the new in-vehicle accessory.

The first display element is transferred to the display screen of the new in-vehicle accessory in a case where a partial area of the in-vehicle display screen is blocked, such that the user may obtain the information provided by the first display element more quickly and conveniently without the need of adjusting the in-vehicle device or the body posture, which ensures the efficiency of information obtaining.

In an embodiment, in a case where the first display element is adjusted to the target display area, the display method provided by the present invention may further include the following step.

A size of the display element in the target display area is adjusted.

For example, in a case where the first display element is added to the target display area, the size of the display element in the target display area may be reduced, and the distance between different display elements may be adaptively adjusted. In this way, the layout and space utilization of the target display area may be optimized, thus improving the visual effect and user experience. In addition, the placement position, color, spacing, and animation effect of each display element in the target display area may further be adjusted, so as to optimize the shape and style of the display element, such that the visual effect and user experience are further improved.

In an embodiment, the display method provided by the present invention may further include the following step.

The height of a display area where the display avoidance area is located is adjusted.

The display device includes at least one display area. For example, the display area where the display avoidance area is located may be moved upwards as a whole until no display avoidance area exists in the display area, such that the user may clearly and accurately obtain information provided by the display element, thus improving driving safety and user experience.

In an embodiment, after the step that the position of the display element on the display device is adjusted according to the display avoidance area, the display method provided by the present invention may further include the following steps.

A voice instruction is received, where the voice instruction is configured to indicate an adjustment of the display element on the display device.

The display element on the display device is adjusted according to the voice instruction.

For example, the voice instruction may be collected by a microphone and may be analyzed to understand an intention of the user. For example, in a case where the voice instruction is "Move a UI element B to the left to a position P," the UI element B on the display device may be controlled to be moved to the left to the position P. In this way, the intention of the user may be quickly conveyed via the voice instruction, and a controller instantly responds and adjusts the display element, which improves operation efficiency, avoids distraction due to a manual operation, and improves personalized experience of the user.

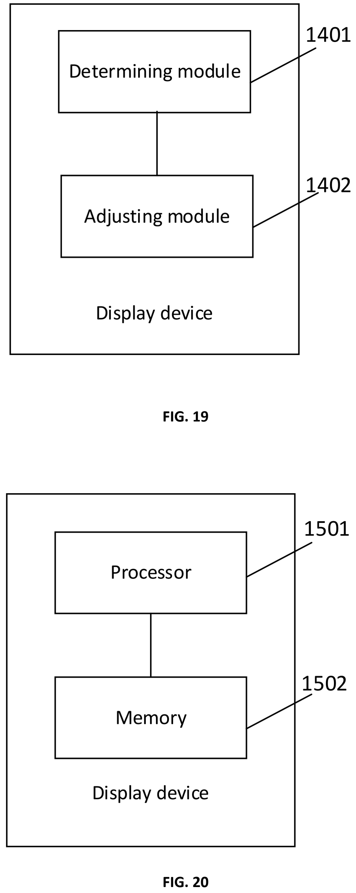

FIG. 19 is a block diagram of a structure of a display device according to an example. Referring to FIG. 19, the display device includes a determining module 1401 and an adjusting module 1402.

The determining module 1401 is configured to determine, in a case where hardware configuration information of a vehicle changes, a display avoidance area in the display device of the vehicle according to the changed hardware configuration information.

The adjusting module 1402 is configured to adjust a position of a display element on the display device according to the display avoidance area.

In the above technical solution, in a case where the hardware configuration information of the vehicle changes, the display avoidance area in the display device of the vehicle is determined according to the changed hardware configuration information. The position of the display element on the display device is adjusted according to the display avoidance area. Different positions of the display element have different degrees of visual intuitiveness for a user. By dynamically adjusting the position of the display element, display blockage caused by a change in hardware configuration may be avoided, such that the user may clearly and accurately obtain information provided by the display element, thus improving driving safety and user experience.

In some examples, the display avoidance area is a display area where no display element is allowed to be displayed.

In some examples, the display avoidance area is a display area where a preset display element is not allowed to be displayed, and the preset display element is a display element that meets a preset condition.

In some examples, the display device includes at least two display areas, and the display avoidance area is located in at least one of the at least two display areas.

In some examples, the at least two display areas are arranged transversely.

In some examples, a display area of the display device extends from one side of a front windshield to the other side.

In some examples, the display area of the display device extends from one side of a center console to the other side.

In some examples, the hardware configuration information includes at least one of: configuration information of a seat, configuration information of a steering wheel, or configuration information of an in-vehicle accessory.

In some examples, changed configuration information of the in-vehicle accessory indicates that a new in-vehicle accessory is installed into a cockpit of the vehicle, or that an in-vehicle accessory installed into the cockpit is removed.

In some examples, the in-vehicle accessory includes a device fixed in the cockpit of the vehicle through a magnetic or physical interface.

In some examples, the display device further includes an obtaining module.

The obtaining module is configured to obtain target information. The target information includes at least one of: a position of eyes of a user, a type of the in-vehicle accessory installed into the cockpit of the vehicle, or a current height of the display area of the display device.

The determining module 1401 is configured to determine the display avoidance area according to the target information and the changed hardware configuration information.

In some examples, the display device further includes a receiving and adjusting module.

The receiving and adjusting module is configured to receive an area setting instruction, where the area setting instruction is configured to indicate a position or a range of the display avoidance area set by the user; and determine the display avoidance area according to the area setting instruction.

In some examples, the adjusting module 1402 includes a determining sub-module and an adjusting sub-module.

The determining sub-module is configured to determine a first display element to be adjusted. The first display element is all display elements currently displayed in the display avoidance area or a preset display element currently displayed in the display avoidance area, and the preset display element is a display element that meets a preset condition.

The adjusting sub-module is configured to adjust the first display element to a target display area. The target display area is located outside the display avoidance area.

In some examples, the preset condition includes a case where a priority of the display element is ranked in a top preset number of positions in a descending order, or a case where the priority of the display element is greater than a preset threshold.

In some examples, the priority of the display element is determined according to at least one of: a degree of importance of the display element; a degree of attention the user pays to the display element; or an information category corresponding to the display element.

In some examples, the display device includes a first display area. The display avoidance area is located in the first display area, and the target display area is an area in the first display area that is located outside the display avoidance area.

In some examples, the display device includes a first display area and a second display area. The display avoidance area is located in the first display area, and the target display area is the second display area.

In some examples, the changed hardware configuration information indicates that a new in-vehicle accessory is installed into the cockpit of the vehicle. The new in-vehicle accessory is a device having a display screen, and the target display area is the display screen of the new in-vehicle accessory.

In some examples, the adjusting module 1402 is further configured to adjust a size of the display element in the target display area.

In some examples, the adjusting module 1402 is further configured to adjust a height of a display area where the display avoidance area is located. The display device includes at least one display area.

In some examples, the adjusting module 1402 is further configured to: after adjusting the position of the display element on the display device according to the display avoidance area, receive a voice instruction, where the voice instruction is configured to indicate an adjustment of the display element on the display device; and adjust the display element on the display device according to the voice instruction.

As for the device in the above embodiments, the specific manner in which each module performs operations has been described in detail in the embodiments related to the method, which is not described in detail here.

FIG. 20 is a block diagram of a display device according to an example. Referring to FIG. 20, the display device includes: a processor 1501 and a memory 1502 configured to store instructions executable by the processor 1501. The processor 1501 is configured to perform the display method provided by any of the above embodiments.

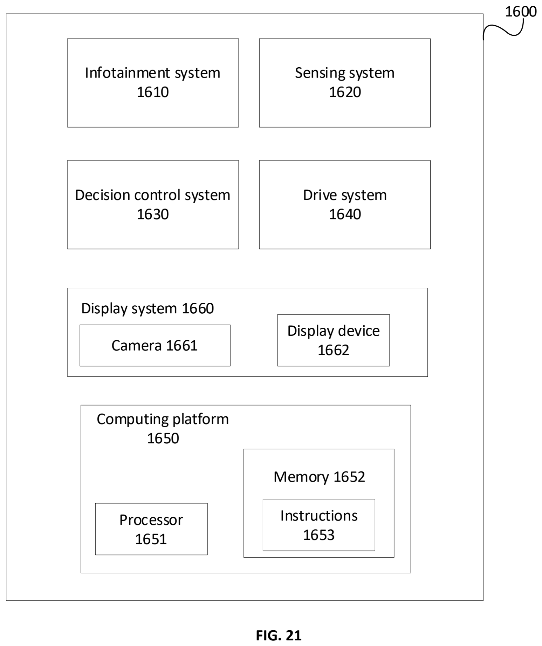

FIG. 21 is a block diagram of a vehicle 1600 according to an example. For example, the vehicle 1600 may be a hybrid vehicle, a non-hybrid vehicle, an electric vehicle, a fuel cell vehicle, or another type of vehicle. The vehicle 1600 may be an autonomous vehicle, a semi-autonomous vehicle, or a non-autonomous vehicle.

Referring to FIG. 21, the vehicle 1600 may include various subsystems, such as an infotainment system 1610, a sensing system 1620, a decision control system 1630, a drive system 1640, a computing platform 1650, and a display system 1660. The vehicle 1600 may also include more or fewer subsystems, and each subsystem may include a plurality of components. In addition, interconnection may be implemented between each subsystem as well as each component of the vehicle 1600 by wired or wireless means.

In some embodiments, the infotainment system 1610 may include a communication system, an entertainment system, a navigation system, etc.

In some embodiments, the display system 1660 may include at least one camera 1661 for collecting a facial image of a user. The facial image may be used by the computing platform 1650 to determine the direction of the sight of the user. The display system 1660 may further include a display device 1662, and the display device 1662 may include one or more of: a physical screen, or a projection display device.

The sensing system 1620 may include several kinds of sensors for sensing information of an environment surrounding the vehicle 1600. For example, the sensing system 1620 may include a global positioning system (the global positioning system may be a GPS system, a Beidou system, or other positioning systems), an inertial measurement unit (IMU), a laser radar, a millimeter wave radar, an ultrasonic radar, and a camera device.

The decision control system 1630 may include a computing system, a vehicle control unit, a steering system, a throttle, and a braking system.

The drive system 1640 may include a component that provides power for the vehicle 1600 to move. In an embodiment, the drive system 1640 may include an engine, an energy source, a transmission system, and a wheel. The engine may be one or a combination of some of an internal combustion engine, an electric motor, and an air compression engine. The engine can convert energy provided by the energy source into mechanical energy.

Some or all of functions of the vehicle 1600 are controlled by the computing platform 1650. The computing platform 1650 may include at least one processor 1651 and memory 1652, and the processor 1651 may execute instructions 1653 stored in the memory 1652.

The processor 1651 may be any conventional processor, such as a commercially available CPU. The processor may further include, for example, a Graphic Process Unit (GPU), a Field Programmable Gate Array (FPGA), a System on Chip (SOC), an Application Specific Integrated Circuit (ASIC), or a combination thereof.

The memory 1652 may be implemented by any type of volatile or non-volatile storage device, or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk, or an optical disk.

In addition to the instructions 1653, the memory 1652 may also store data, such as a road map, route information, the position, direction, and speed of the vehicle, and other data. The data stored in the memory 1652 may be used by the computing platform 1650.

In the embodiments of the present invention, the processor 1651 may execute the instructions 1653 to complete all or some of the steps of the above display method.

In another example, a computer-readable storage medium having stored thereon a computer program is provided. The computer program, when executed by a processor, is configured to implement the steps of the above display method.

In another example, a computer program product is further provided. The computer program product includes a computer program executable by a programmable device. The computer program has a code part which is configured to, when executed by the programmable device, perform the above display method.

In addition, the term "exemplary" is used herein to denote an example, an instance, and a view. Any aspect or design described herein as "exemplary" is not necessarily understood to be advantageous over other aspects or designs. Instead, the use of the word "exemplary" aims to present concepts in a specific way. As used herein, the term "or" is intended to denote an inclusive "or" rather than an exclusive "or." That is, unless otherwise specified, or unless it is clear from the context, "X applies Y or Z" is intended to denote any one of natural inclusive arrangements. That is, if X applies Y; X applies Z; or X applies both Y and Z, then "X applies Y or Z" is satisfied in any one of the preceding instances. Furthermore, unless otherwise specified or unless the context clearly points to a singular form, articles "one" and "a" as used in the present application and appended claims are generally understood to indicate "one or more."

Similarly, although the present invention has been shown and described with respect to one or more implementations, those skilled in the art may conceive of equivalent variations and modifications after reading and understanding the specification and accompanying drawings. The present invention includes all such modifications and variations and is limited merely by the scope of the claims. In particular, with regard to various functions performed by the components (e.g., elements, resources, etc.) described above, unless otherwise noted, the terms used to describe such components are intended to correspond to any component (functionally equivalent) that performs the specific function of the described component, even if the structure is not equivalent to the disclosed structure. Further, although particular features of the present invention may have been disclosed with respect to merely one of a plurality of implementations, such features may be combined with one or more other features of other implementations, as may be desired and beneficial for any given or particular application. In addition, terms "include," "possess," "have," "there is," or variations thereof as used in specific implementations or claims are intended to be inclusive in a manner similar to the term "contain."

It is to be understood that the present invention is not limited to the precise structure that has been described above and illustrated in the accompanying drawings, and that various modifications and changes may be made without departing from its scope. The scope of the present invention is merely limited by the appended claims.

In the above detailed description, reference is made to the accompanying drawings, where particular aspects of the present invention that may be practiced are shown in an illustration mode. In this regard, terms indicating directions or positional relationships, such as "center," "longitudinal," "transverse," "length," "width," "thickness," "up," "down," "front," "back," "left," "right," "vertical," "horizontal," "top," "bottom," "inside," "outside," "clockwise," "counterclockwise," "axial," "radial," and "circumferential", may be used with reference to the orientation of the depicted figure. Since the components of the described devices may be positioned in a plurality of different orientations, the directional terms may be used for illustrative purposes and are not restrictive. It is to be understood that other aspects may be utilized and structural or logical changes may be made without departing from the concepts of the present invention. Thus, the following detailed description is not to be regarded as restrictive.

It is to be understood that, unless otherwise specifically noted, various features of some embodiments of the present invention described herein may be combined with one another. As used herein, the term "and/or" includes any of the relevant listed items and any combination of any two or more. Similarly, "at least one of ..." includes any of the relevant listed items and any combination of any two or more.

It is to be understood that, unless otherwise expressly specified and limited, terms "joint," "attach," "install," "connect," "connection," "fix," etc. used in the embodiments of the present invention are to be broadly construed, e.g., it may be a fixed connection, a detachable connection or an integral one; it may be a mechanical connection, an electrical connection or mutual communication; it may be a direct connection or an indirect connection through an intermediate medium; and it may be connection within two elements, or an interaction relationship between two elements, unless otherwise expressly limited. For those ordinarily skilled in the art, the specific meanings of the above terms herein may be understood according to specific circumstances.

In addition, the term "on" as used with respect to a component, element, or material layer formed or located "on" a surface may be used herein to indicate that the component, element, or material layer is "indirectly" positioned (e.g., placed, formed, deposited, etc.) on the surface such that one or more additional components, elements, or layers are arranged between the surface and the component, element or material layer. However, the term "on" as used with respect to a component, element, or material layer formed or located "on" a surface may further have a specific meaning: the component, element, or material layer is "directly" positioned (e.g., placed, formed, deposited, etc.) on the surface, e.g., in direct contact with the surface.

Although terms such as "first," "second," and "third" may be used herein to describe various members, components, areas, layers, or segments, these members, components, areas, layers, or segments are not limited by these terms. Instead, these terms are used merely to distinguish one member, component, area, layer, or segment from another member, component, area, layer, or segment. Accordingly, without departing from the teachings of the various examples, the first member, component, area, layer, or segment referred to in the examples described herein may also be referred to as a second member, component, area, layer, or segment. In addition, the terms "first" and "second" are used merely for the purpose of description, and cannot be construed as indicating or implying relative importance or implicitly specifying the number of indicated technical features. Thus, a feature limited by "first" and "second" may explicitly indicate or implicitly include at least one of such features. In the description herein, "a plurality of" means at least two, such as two and three, unless otherwise clearly and specifically limited.

It is to be understood that spatially relative terms such as "above," "on," "below," and "under" are used herein to describe the relationship between one element and another element shown in the drawings. In addition to the orientations depicted in the accompanying drawings, such spatially relative terms are further intended to include different orientations of the device in use or operation. For example, if the device in the accompanying drawing is turned over, an element described as being "above" or "on" another element is "below" or "under" the another element. Thus, according to the spatial orientation of the device, the term "above" includes two orientations, i.e., above and below. The device may be oriented in other ways (e.g., rotated 90 degrees or in other orientations), and the spatially relative terms used herein are to be interpreted accordingly.

## Claims

1. A display method, comprising:
determining (S11), in a case where hardware configuration information of a vehicle changes, a display avoidance area (301, 302) in a display device of the vehicle according to the changed hardware configuration information; and
adjusting (S12) a position of a display element on the display device according to the display avoidance area (301, 302).

2. The display method according to claim 1, wherein the display avoidance area (301, 302) is a display area where no display element is allowed to be displayed; or
the display avoidance area (301, 302) is a display area where a preset display element is not allowed to be displayed, and the preset display element is a display element that meets a preset condition;
wherein optionally, the display device comprises at least two display areas (201, 202, 203), the display avoidance area (301, 302) is located in at least one of the at least two display areas (201, 202, 203), and optionally, the at least two display areas (201, 202, 203) are arranged transversely.

3. The display method according to claim 1 or 2, wherein a display area (201, 202, 203) of the display device extends from one side of a front windshield to the other side; or the display area (201, 202, 203) of the display device extends from one side of a center console to the other side.

4. The display method according to any one of claims 1 to 3, wherein the hardware configuration information comprises at least one of: configuration information of a seat, configuration information of a steering wheel, or configuration information of an in-vehicle accessory;
wherein optionally, changed configuration information of the in-vehicle accessory indicates that a new in-vehicle accessory is installed into a cockpit of the vehicle, or that an in-vehicle accessory installed into the cockpit is removed;
wherein optionally, the in-vehicle accessory comprises a device fixed in the cockpit of the vehicle through a magnetic or physical interface.

5. The display method according to any one of claims 1 to 4, further comprising:
obtaining (S13) target information, wherein the target information comprises at least one of: a position of eyes of a user, a type of an in-vehicle accessory installed into a cockpit of the vehicle, or a current height of a display area (201, 202, 203) of the display device;
wherein determining (S11) the display avoidance area (301, 302) in the display device of the vehicle according to the changed hardware configuration information comprises:
determining (S14) the display avoidance area (301, 302) according to the target information and the changed hardware configuration information.

6. The display method according to any one of claims 1 to 5, further comprising:
receiving an area setting instruction, wherein the area setting instruction is configured to indicate a position or a range of the display avoidance area (301, 302) set by a user; and
determining the display avoidance area (301, 302) according to the area setting instruction.

7. The display method according to any one of claims 1 to 6, wherein adjusting (S12) the position of the display element on the display device according to the display avoidance area (301, 302) comprises:
determining a first display element to be adjusted, wherein the first display element comprises all display elements currently displayed in the display avoidance area (301, 302), or the first display element is a preset display element currently displayed in the display avoidance area (301, 302), and the preset display element is a display element that meets a preset condition; and
adjusting the first display element to a target display area, wherein the target display area is located outside the display avoidance area (301, 302).

8. The display method according to claim 2 or 7, wherein the preset condition comprises a case where a priority of the display element is ranked in a top preset number of positions in a descending order, or a case where the priority of the display element is greater than a preset threshold;
wherein optionally, the priority of the display element is determined according to at least one of: a degree of importance of the display element; a degree of attention a user pays to the display element; or an information category corresponding to the display element.

9. The display method according to claim 7, wherein the display device comprises a first display area, the display avoidance area (301, 302) is located in the first display area, and the target display area is an area in the first display area that is located outside the display avoidance area (301, 302); or
the display device comprises the first display area and a second display area, the display avoidance area (301, 302) is located in the first display area, and the target display area is the second display area; or
the changed hardware configuration information indicates that a new in-vehicle accessory is installed into a cockpit of the vehicle, the new in-vehicle accessory is a device having a display screen, and the target display area is the display screen of the new in-vehicle accessory;
wherein optionally, the method further comprises:
adjusting a size of a display element in the target display area.

10. The display method according to any one of claims 1 to 9, further comprising:
adjusting a height of a display area where the display avoidance area (301, 302) is located, wherein the display device comprises at least one display area (201, 202, 203).

11. The display method according to any one of claims 1 to 10, wherein after adjusting (S12) the position of the display element on the display device according to the display avoidance area (301, 302), the method further comprises:
receiving a voice instruction, wherein the voice instruction is configured to indicate an adjustment of the display element on the display device; and
adjusting the display element on the display device according to the voice instruction.

12. A display device, comprising:
a determining module (1401), configured to determine, in a case where hardware configuration information of a vehicle changes, a display avoidance area (301, 302) in the display device of the vehicle according to the changed hardware configuration information; and
an adjusting module (1402), configured to adjust a position of a display element on the display device according to the display avoidance area (301, 302).

13. A vehicle (1600) comprising the display device provided by claim 12.

14. A computer-readable storage medium having stored thereon a computer program, wherein the computer program, when executed by a processor, implements the steps of the display method according to any one of claims 1 to 11.

15. A computer program product comprising a computer program, wherein the computer program, when executed by a processor, implements the steps of the display method according to any one of claims 1 to 11.
